# EUROPÄISCHE PATENTSCHRIFT

(11) **EP 2 586 089 B1**
(45) Veröffentlichungstag und Bekanntmachung des Hinweises auf die Patenterteilung: **25.10.2017**
(21) Anmeldenummer: 11719534.7
(22) Anmeldetag: 10.05.2011
(51) Int. Cl.: H01M 10/44, H01M 10/48, H01M 10/625, H02J 7/00, H01M 10/6569, H01M 10/613, B60L 11/18

(54) **VERFAHREN ZUR ÜBERWACHUNG EINES LADEVORGANGS EINER BATTERIE**
METHOD FOR MONITORING A CHARGING PROCESS OF A BATTERY
PROCÉDÉ DE SURVEILLANCE DU PROCESSUS DE CHARGE D'UNE BATTERIE

(30) Priorität: 25.06.2010 DE 102010030548
(43) Veröffentlichungstag der Anmeldung: 01.05.2013
(73) Patentinhaber: Samsung SDI Co., Ltd., Gyeonggi-do (KR); Robert Bosch GmbH, 70442 Stuttgart (DE)
(72) Erfinder: KLUTHE, Christian, 70771 Leinfelden-Echterdingen (DE); MOTHAIS, Francois, 70191 Stuttgart (DE); KRIEG, Berengar, 70839 Gerlingen (DE); LEUTHNER, Stephan, 71229 Leonberg (DE); LANG, Martin, 74394 Hessigheim (DE)
(74) Vertreter: Bee, Joachim
(86) Internationale Anmeldenummer: PCT/EP2011/057535
(87) Internationale Veröffentlichungsnummer: WO 2011/160891

(56) Entgegenhaltungen:
- US-A- 5 652 501
- US-A1- 2009 153 104
- US-B1- 6 285 161

## Beschreibung

Die vorliegende Erfindung betrifft ein Verfahren zur Überwachung eines Ladevorgangs einer Batterie, ein Batteriesystem sowie ein Kraftfahrzeug, welches ausgebildet ist, das Verfahren auszuführen.

### Stand der Technik

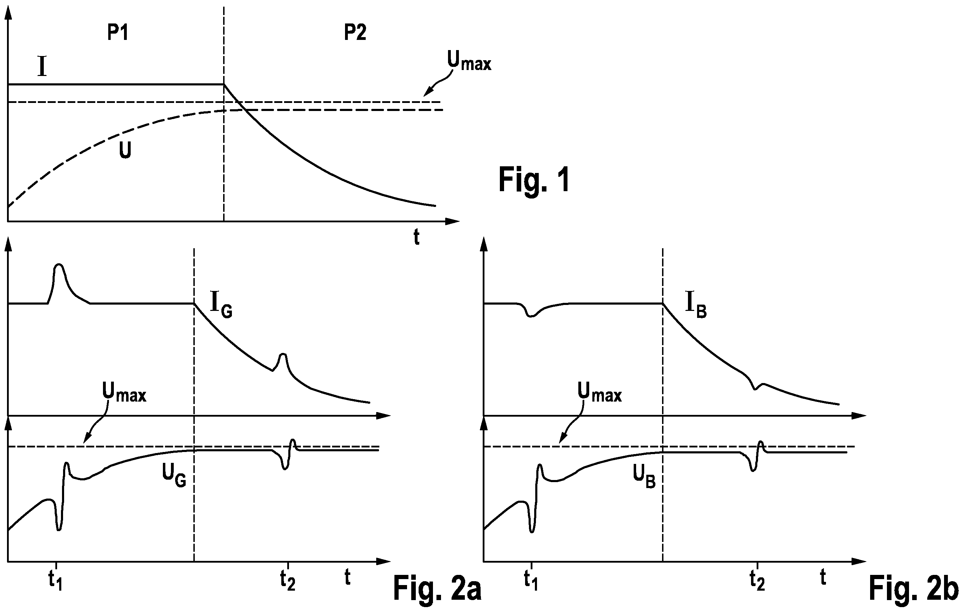

In Hybrid- und Elektrofahrzeugen werden Batterien in Lithium-Ionen- oder Nickel-Metallhydrid-Technologie eingesetzt, die eine große Anzahl in Reihe geschalteter elektrochemischer Batteriezellen aufweisen. Ein Batteriemanagementsystem wird zur Überwachung der Batterie eingesetzt und soll neben einer Sicherheitsüberwachung eine möglichst hohe Lebensdauer gewähren. Dazu wird die Spannung jeder einzelnen Batteriezelle zusammen mit dem Batteriestrom und der Batterietemperatur gemessen und eine Zustandsschätzung (beispielsweise des Ladezustandes oder des Alterungszustandes der Batterie) vorgenommen. Um die Lebensdauer zu maximieren, ist es hilfreich, jederzeit die aktuell gegebene maximale Leistungsfähigkeit der Batterie zu kennen, also die maximal abgeb- oder aufnehmbare elektrische Leistung. Wird diese Leistungsfähigkeit überschritten, kann die Alterung der Batterie stark beschleunigt werden.
Auch während eines Ladevorgangs der Batterie überwacht das Batteriemanagementsystem ständig wesentliche Parameter der Batterie, um eine Schädigung einzelner Batteriezellen oder der gesamten Batterie zu vermeiden. Fig. 1 zeigt einen typischen zeitlichen Verlauf eines Ladestroms I und einer Zellspannung einer Batteriezelle U während eines aus dem Stand der Technik bekannten Ladevorgangs einer Lithium-Ionen-Batterie. In einer ersten Phase P1, der so genannten CC-Phase (constant current = CC), wird die Batterie mit einem konstanten Strom aufgeladen, so dass die Zellspannung einer Batteriezelle zunimmt. Ab Erreichen einer vorbestimmten Grenzspannung wird die Batterie in einer zweiten Phase P2, der so genannten CV-Phase (constant voltage = CV), bei einer konstanten Spannung weitergeladen, deren Wert beispielsweise einer Zellspannung von 4.1V entspricht und unterhalb einer kritischen maximalen Zellspannung (Abschaltgrenze Uₘₐₓ) liegt. Der Ladestrom nimmt in dieser Phase P2 näherungsweise exponentiell ab. Der Ladevorgang wird beendet, sobald entweder eine vorbestimmte Ladezeit erreicht oder ein vorbestimmter Wert des Ladestroms unterschritten wird. Die geschilderte Ladestrategie wird nach ihren charakteristischen Phasen als CC-CV Ladung bezeichnet.

Während des Ladevorgangs überwacht das Batteriemanagementsystem der Batterie ständig die Temperaturen in den die Batterie unterteilenden Batteriemodulen sowie alle Zellspannungen. Für den Fall, dass die vorbestimmten Sicherheitsschwellen für eine maximale Zelltemperatur oder eine minimale oder maximale Zellspannung (z.B. Uₘₐₓ in Fig.1) unter- oder überschritten werden, öffnet das Batteriemanagementsystem automatisch die Hochvolt-Schütze der Batterie und schaltet diese damit ab (bzw. stromlos). Diese Sicherheitsfunktion wird benötigt, um die Batterie vor einem irreparablen Schaden zu bewahren, der im Extremfall auch zur Instabilität des Batteriepacks führen könnte. Auch der Fall einer erhöhten Batterietemperatur (oberhalb einer vorbestimmten Betriebstemperatur) soll im Betrieb weitestgehend vermieden werden, da diese eine beschleunigte Alterung des Batteriepacks nach sich zieht.

Aus den oben genannten Gründen meldet das Batteriemanagementsystem auch während des Ladevorgangs fortlaufend die Werte der Zellspannungen und Modultemperaturen an ein Steuergerät eines zur Ladung der Batterie verwendeten Ladegeräts. Während des Ladevorgangs erwärmt sich die Batterie auf Grund von Verlustleistung. Um zu vermeiden, dass die Batterie während des Ladevorgangs den erlaubten Temperaturbereich verlässt, wird von einem Hauptsteuergerät eines die Batterie umfassenden elektrischen Kraftfahrzeugs ein Klimakompressor zugeschaltet, sobald die Batterietemperatur einen vorbestimmten Grenzwert überschreitet.

Fig. 2a zeigt den zeitlichen Verlauf eines Stroms I_{G} und einer Spannung U_{G} in bzw. an einem die Batterie, den Klimakompressor und das Ladegerät umfassenden Gesamtsystem während des Ladevorgangs der Batterie. Fig. 2b zeigt den gleichzeitigen Verlauf eines Ladestroms I_{B} und einer Ladespannung U_{B} in bzw. an der Batterie. In zwei Zeitpunkten t₁ und t₂ erfolgt jeweils ein Einschaltvorgang des Klimaprozessors. Dieser erfordert kurzfristig eine Erhöhung des Stroms I_{G}, welcher nicht allein vom Ladegerät bereitgestellt werden kann, sondern auch aus der Batterie geliefert werden muss. Dies hat zur Folge, dass der Ladestrom I_{B} in beiden Zeitpunkten kurzfristig einbricht. Das Steuergerät des Ladegeräts misst den Ladestromeinbruch und gleicht den Leistungsverlust umgehend durch eine Erhöhung der Ladespannung U_{B} aus. Da der Klimakompressor bereits kurz nach dem Einschaltvorgang einen sehr viel kleineren Strom benötigt, wird kurz nach dem Einschaltvorgang die Batterie mit einer überhöhten Ladespannung U_{B} geladen (siehe abrupte Erhöhung von U_{B} kurz nach den Zeitpunkten t₁ und t₂ in Fig. 2b). Für den Fall, dass sich der Ladevorgang der Batterie in einer Phase mit relativ niedrigen Zellspannungen befindet (z. B. Zeitpunkt t₁), ist dies unproblematisch. Für den Fall dagegen, dass sich der Ladevorgang der Batterie in einer Phase mit höheren Zellspannungen befindet (z. B. Zeitpunkt t₂), kann eine unkontrollierte Abschaltung der Batterie infolge der Verletzung des maximalen Zellspannungslimits auftreten.

Die US 6 285 161 B1 offenbart ein Batterieladesystem, das einen Spannungsgrenzwert aufweist, wobei bei Überschreitung des Spannungsgrenzwertes ein Ableitstrom erzeugt wird.

Aus der US 2009/0153104 A1 ist ein Ladeverfahren für eine Batterie mit zwei Ladeschritten bekannt.

Die US 5652 501 A zeigt einen Spannungssensor zur Messung von Spannungen in Batteriezellen einer Batterie.

### Offenbarung der Erfindung

Erfindungsgemäß wird ein Verfahren zur Überwachung eines Ladevorgangs einer Batterie, bevorzugt einer Lithium-Ionen-Batterie, zur Verfügung gestellt. Die Batterie, ein Lademodul, welches die Batterie mit einem Ladestrom versorgt, sowie mindestens ein zusätzlicher elektrischer Verbraucher sind Komponenten einer elektrischen Schaltung. Die Batterie umfasst eine Vielzahl von in Reihe geschalteten Batteriezellen. Das Verfahren umfasst folgende Schritte: Zellspannungen mehrerer Batteriezellen werden in regelmäßigen zeitlichen Abständen gemessen, und eine Belastung der Batterie durch einen Einschaltvorgang des zusätzlichen elektrischen Verbrauchers wird verhindert, wenn die gemessene Zellspannung einer Batteriezelle einen vorbestimmten Zellspannungsschwellenwert überschreitet. Durch diese Verfahrensschritte wird eine unkontrollierte Abschaltung der Batterie infolge der Verletzung des maximalen Zellspannungslimits durch die Einschaltung des zusätzlichen Verbrauchers verhindert.

Die Batterie und der zusätzliche Verbraucher können Teile eines Kraftfahrzeugs sein, und ein Hauptsteuergerät des Kraftfahrzeugs kann den zusätzlichen Verbraucher ansteuern. Erfindungsgemäß ist der zusätzliche Verbraucher eine elektrische Kühleinheit zur Kühlung der Batterie, insbesondere ein Klimakompressor.

Erfindungsgemäß ist vorgesehen, dass zusätzlich zu den Zellspannungen mehrerer Batteriezellen ein Batterieladestrom sowie mindestens eine Temperatur der Batterie in regelmäßigen zeitlichen Abständen gemessen werden, in Abhängigkeit der Zellspannungen, des Batterieladestroms und der Temperatur ein Schätzwert ermittelt wird, welcher einer geschätzten Maximaltemperatur in der Batterie bei ununterbrochener Fortsetzung des Ladevorgangs entspricht; und die elektrische Kühleinheit eingeschaltet wird, wenn der Schätzwert einen vorbestimmten Temperaturschwellenwert überschreitet, aber nicht, wenn die gemessene Zellspannung einer Batteriezelle den vorbestimmten Zellspannungsschwellenwert überschreitet. Dadurch wird erreicht, dass die Einschaltung der Kühleinheit zeitlich in eine frühere Phase des Ladevorgangs der Batterie vorverlegt wird, in welcher die Zellspannungen tendenziell noch weiter unterhalb des Zellspannungsschwellenwerts liegen, also in eine Phase, in welcher ein Einschalten der Kühleinheit noch nicht das Risiko einer unkontrollierten Abschaltung der Batterie infolge der Verletzung des maximalen Zellspannungslimits nach sich zieht.

Bei der Ermittlung des Schätzwertes kann eine Hysterese der Zellspannungen berücksichtigt werden. Der Schätzwert kann von einer Batteriemanagementeinheit ermittelt und an das Hauptsteuergerät des Kraftfahrzeugs gesendet werden. Außerdem kann der Schätzwert von der Batteriemanagementeinheit über einen CAN (Controller Area Network)-Bus an das Hauptsteuergerät des Fahrzeugs übermittelt werden.

Ein weiterer Erfindungsaspekt betrifft ein Batteriesystem mit einer Batterie, bevorzugt einer Lithium-Ionen-Batterie, und einer mit der Batterie verbundenen Batteriemanagementeinheit, wobei die Batterie eine Vielzahl von in Reihe geschalteten Batteriezellen umfasst. Die Batteriemanagementeinheit verfügt über mehrere Spannungsmesseinheiten, welche dazu ausgebildet sind, eine Zellspannung jeweils einer Batteriezelle zu messen, wenigstens eine Temperaturmesseinheit, welche dazu ausgebildet ist, eine Temperatur der Batterie zu messen, wenigstens eine Strommesseinheit, welche dazu ausgebildet ist, einen Batterieladestrom zu messen, und einen mit den Spannungsmesseinheiten, der Temperaturmesseinheit und der Strommesseinheit verbundenen Kontroller. Der Kontroller ist dazu ausgebildet, während eines Ladevorgangs der Batterie in Abhängigkeit des Batterieladestroms, der Zellspannungen und der Temperatur einen Schätzwert zu ermitteln, welcher der Maximaltemperatur in der Batterie bei ununterbrochener Fortsetzung des Ladevorgangs entspricht. Dadurch wird erreicht, dass in einem das Batteriesystem umfassenden Gesamtsystem auf Grundlage des Schätzwerts eine Einschaltung einer Kühleinheit zur Kühlung der Batterie schon in einer früheren Phase des Ladevorgangs der Batterie erfolgen kann, in welcher die Zellspannungen tendenziell noch weiter unterhalb des Zellspannungsschwellenwerts liegen, also in einer Phase, in welcher ein Einschalten der Kühleinheit noch nicht das Risiko einer unkontrollierten Abschaltung der Batterie infolge der Verletzung des maximalen Zellspannungslimits nach sich zieht.

Es können mehrere Temperaturmesseinheiten in der Batterie angeordnet sein, welche ausgebildet sind, die Temperatur in verschiedenen Bereichen der Batterie zu messen. Bei der Ermittlung des Schätzwertes kann eine Hysterese der Zellspannungen berücksichtigt werden. Außerdem kann der Schätzwert über eine Schnittstelle der Batteriemanagementeinheit, insbesondere eine CAN-Schnittstelle, ausgebbar sein.

Ein weiterer Erfindungsaspekt betrifft ein Kraftfahrzeug mit einem Batteriesystem, welches eine Batterie, bevorzugt eine Lithium-Ionen-Batterie, und eine mit der Batterie verbundene Batteriemanagementeinheit umfasst; außerdem mit einem Hauptsteuergerät und mit mindestens einem zusätzlichen elektrischen Verbraucher, wobei das Batteriesystem mit einem Antriebssystem des Kraftfahrzeuges verbunden ist und das Hauptsteuergerät den zusätzlichen Verbraucher ansteuert. Das Kraftfahrzeug ist dazu ausgebildet, während eines Ladevorgangs der Batterie das erfindungsgemäße Verfahren auszuführen. In einer bevorzugten Ausführungsform umfasst das Kraftfahrzeug das erfindungsgemäße Batteriesystem.

### Zeichnungen

Ausführungsbeispiele der Erfindung werden anhand der Zeichnungen und der nachfolgenden Beschreibung näher erläutert. Es zeigen:
Figur 1 einen typischen zeitlichen Verlauf eines Ladestroms und einer Zellspannung einer Batteriezelle während eines aus dem Stand der Technik bekannten Ladevorgangs einer Lithium-Ionen-Batterie,
Figur 2 einen zeitlichen Verlauf eines Stroms und einer Spannung in einem Gesamtsystem (a) sowie einen gleichzeitigen Verlauf eines Ladestroms und einer Ladespannung in einer Batterie (b) aus dem Stand der Technik,
Figur 3 ein Ausführungsbeispiel eines erfindungsgemäßen Verfahrens,
Figur 4 ein Ausführungsbeispiel eines erfindungsgemäßen Batteriesystems, und
Figur 5 eine Verschaltung des erfindungsgemäßen Batteriesystems in einem Ausführungsbeispiel eines erfindungsgemäßen Kraftfahrzeugs.

### Ausführungsformen der Erfindung

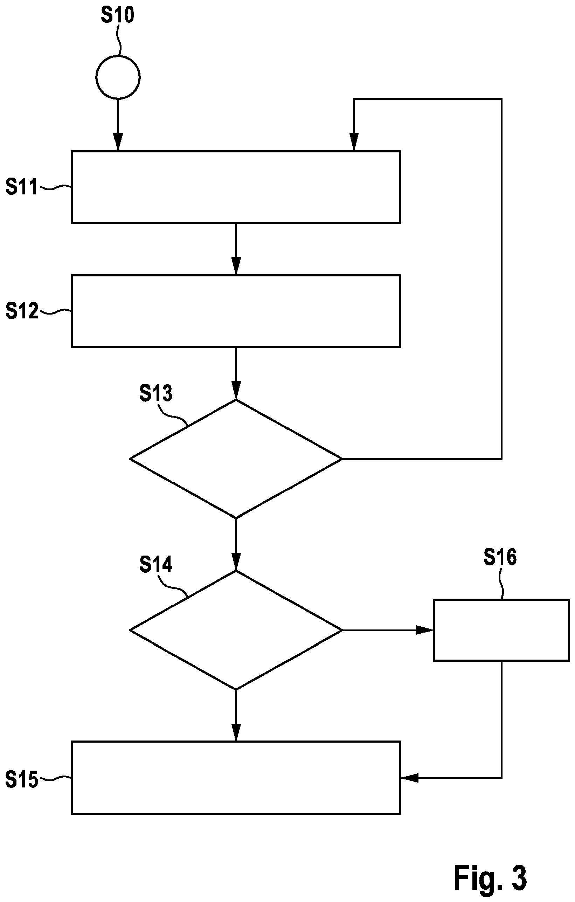

Fig. 3 zeigt ein Ausführungsbeispiel eines erfindungsgemäßen Verfahrens. Das Verfahren dient zur Überwachung eines Ladevorgangs einer Batterie, welche im Ausführungsbeispiel in einem Kraftfahrzeug angeordnet ist. Außerdem umfasst das Kraftfahrzeug einen zur Kühlung der Batterie geeigneten Klimakompressor als zusätzlichen Verbraucher sowie ein Hauptsteuergerät, welches den Klimakompressor ansteuert. Das Verfahren startet in Schritt S10. In Schritt S11 werden während des Ladevorgangs der Batterie Zellspannungen mehrerer in Reihe geschalteter Batteriezellen, ein Batterieladestrom sowie mehrere Temperaturen in verschiedenen Bereichen der Batterie gemessen. In Schritt S12 wird in Abhängigkeit des Batterieladestroms, der Zellspannungen und der Temperaturen eine hypothetische Maximaltemperatur in der Batterie geschätzt, welche in einem Bereich der Batterie erreicht werden kann, wenn der Ladevorgang ununterbrochen und ohne Einschaltung des Klimakompressors fortgesetzt wird. Um den Wert der hypothetischen Maximaltemperatur zu berechnen, kann in einer Software eines Batteriemanagementsystems der Batterie eine Vorhersage-Funktion eingebaut werden, die aus den angegebenen Messwerten eine maximale Temperatur in einer Batteriezelle vorhersagt, die bis zum Abschluss einer CC-CV Ladung innerhalb der Batterie auftreten kann, sofern der Klimakompressor nicht eingeschaltet wird. Die Vorhersage-Funktion kann eine Hysterese in den Batteriezellen berücksichtigen, die dadurch gekennzeichnet ist, dass die Zellspannung während des Lade- und Entladevorgangs von der Ruhespannung abweicht. Die Höhe der Hysterese ist dabei umso höher, je höher der jeweilige Lade- oder Entladestrom ist. Ein Modell zur Vorhersage der Maximaltemperatur in Abhängigkeit der genannten Parameter wird durch vorherige Messungen an einer ersten Prototypen-Batterie ermittelt.

Im Schritt S13 wird die geschätzte hypothetische Maximaltemperatur in der Batterie durch das Hauptsteuergerät mit einem vorbestimmten Temperaturschwellenwert verglichen, welcher einer Temperatur entspricht, welche in der Batterie nicht überschritten werden soll, um deren irreversible Beschädigung zu vermeiden. Wenn die geschätzte hypothetische Maximaltemperatur in der Batterie nicht größer als der vorbestimmte Temperaturschwellenwert ist, wird zum Beginn des Verfahrens in Schritt S11 zurückverzweigt, anderenfalls wird im Schritt S14 durch das Hauptsteuergerät geprüft, ob keine der gemessenen Zellspannungen höher als ein vorbestimmter Zellspannungsschwellenwert ist. Ist dies der Fall, so wird in einem Schritt S15 der zur Kühlung der Batterie geeignete Klimakompressor durch das Hauptsteuergerät eingeschaltet.

Ist dagegen mindestens eine der gemessenen Zellspannungen höher als der vorbestimmte Zellspannungsschwellenwert, so wird durch das Hauptsteuergerät in Schritt S16 der Ladevorgang der Batterie abgebrochen bzw. die Batterie elektrisch abgekoppelt, bevor der Klimakompressor in S15 eingeschaltet wird. Somit wird zumindest während des Ladevorgangs der Batterie eine Leistungsaufnahme des Klimakompressors blockiert und verhindert, dass ein für die Leistungsaufnahme des Klimakompressors benötigter Strom auch durch die Batterie geliefert wird.

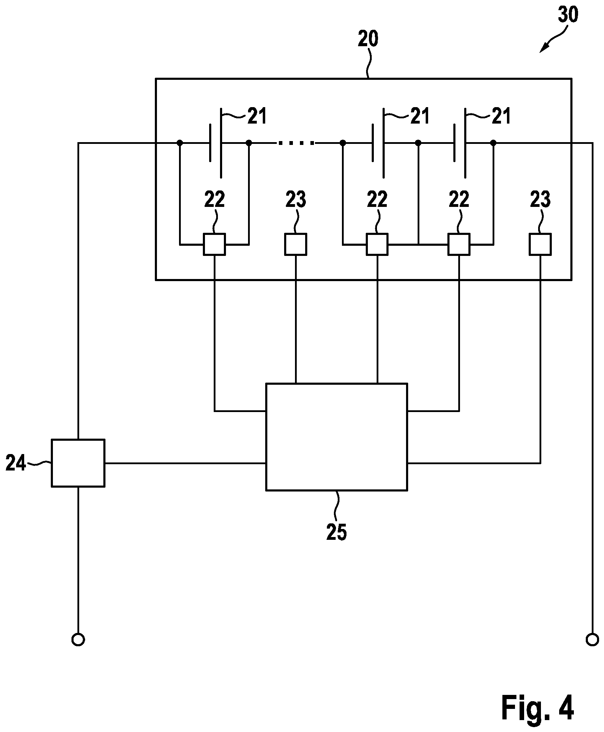

Fig. 4 zeigt ein Ausführungsbeispiel eines erfindungsgemäßen, insgesamt mit 30 bezeichneten Batteriesystems. Eine Batterie 20 umfasst eine Vielzahl von in Reihe geschalteten Batteriezellen 21. Es sind mehrere Spannungsmesseinheiten 22 vorgesehen, welche jeweils eine Zellspannung einer Batteriezelle messen. Außerdem sind Temperaturmesseinheiten 23 in verschiedenen Bereichen der Batterie angeordnet. Eine Strommesseinheit 24 misst während eines Ladevorgangs der Batterie 20 einen Batterieladestrom. Die Spannungsmesseinheiten 22, die Temperaturmesseinheiten 23 und die Strommesseinheit 24 sind mit einem Kontroller 25 verbunden, welcher dazu ausgebildet ist, während eines Ladevorgangs der Batterie in Abhängigkeit der von den Spannungsmesseinheiten 22, den Temperaturmesseinheiten 23 und der Strommesseinheit 24 gelieferten Messwerte eine hypothetische Maximaltemperatur in der Batterie zu schätzen, welche in einem Bereich der Batterie erreicht werden kann, wenn der Ladevorgang ununterbrochen und ohne Einschaltung eines Klimakompressors fortgesetzt wird. Der Kontroller 25 kann dazu ausgebildet sein, die Berechnung der hypothetischen Maximaltemperatur wie bei dem in der Beschreibung der Figur 3 geschilderten Verfahren vorzunehmen.

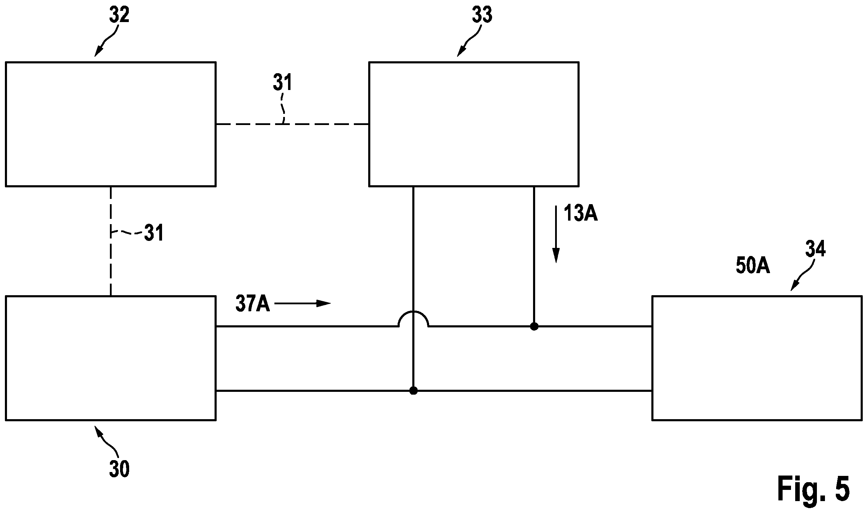

Figur 5 zeigt eine Verschaltung des erfindungsgemäßen Batteriesystems 30 in einem Ausführungsbeispiel eines erfindungsgemäßen Kraftfahrzeugs. Das in Figur 4 dargestellte erfindungsgemäße Batteriesystem 30, ein Hauptsteuergerät des Kraftfahrzeugs 32 und ein Lademodul 33, welches das Batteriesystem 30 mit einem Ladestrom versorgt und welches nicht notwendigerweise Teil des erfindungsgemäßen Kraftfahrzeugs ist, liegen an einem gemeinsamen Bus-System, insbesondere an einem Controlled Area Network (CAN)-Bus 31. Das Batteriesystem 30, das Lademodul 33 sowie ein Klimakompressor 34 sind als Komponenten einer elektrischen Schaltung untereinander verbunden, wobei alle drei Komponenten parallel geschaltet sind. Die Batteriemanagementeinheit des erfindungsgemäßen Batteriesystems 30 sendet über den CAN-Bus 31 in Echtzeit folgende Werte an das Hauptsteuergerät des Kraftfahrzeugs 32 und aktualisiert sie zyklisch:
(1) Maximaler Zellspannungswert innerhalb der Batterie 20;
(2) Minimaler Zellspannungswert innerhalb der Batterie 20; und
(3) die hypothetische Maximaltemperatur in der Batterie 20, welche in einem Bereich der Batterie 20 erreicht werden kann, wenn der Ladevorgang ununterbrochen und ohne Einschaltung des Klimakompressors 34 fortgesetzt wird.

Wenn die von der Batteriemanagementeinheit des erfindungsgemäßen Batteriesystems 30 an das Hauptsteuergerät des Kraftfahrzeugs 32 gesendete hypothetische Maximaltemperatur in der Batterie 20 einen vorbestimmten Temperaturschwellenwert überschreitet, schaltet das Hauptsteuergerät des Kraftfahrzeugs 32 den Klimakompressor 34 vorbehaltlich der nachfolgend genannten Bedingung ein.

Wenn der Klimakompressor 34 während einer CC-CV Ladung der Batterie 20 eingeschaltet wird, benötigt dieser kurzfristig einen Strom von beispielsweise 50 A. Dieser Strom kann nicht allein vom Lademodul 33 bereitgestellt werden, sondern muss auch vom Batteriesystem 30 geliefert werden, wodurch der Ladestrom einbricht. Dieser Einbruch wird grundsätzlich vom Hauptsteuergerät des Kraftfahrzeugs 32 erkannt und an einen Regler des Lademoduls 33 gemeldet, worauf der Regler des Lademoduls 33 über eine Erhöhung der Ladespannung gegensteuert, was jedoch entweder eine Batteriezelle 21 beschädigen kann, in welcher der Zellspannungswert einen vorbestimmten Zellspannungsschwellenwert überschreitet, oder zu einer unkontrollierten Abschaltung der Batterie 20 durch die Batteriemanagementeinheit führt.

Daher schaltet das Hauptsteuergerät des erfindungsgemäßen Kraftfahrzeugs 32 den Klimakompressor 34 stattdessen nicht ein, wenn der von der Batteriemanagementeinheit des erfindungsgemäßen Batteriesystems 30 an das Hauptsteuergerät des Kraftfahrzeugs 32 gesendete maximale Zellspannungswert innerhalb der Batterie 20 einen vorbestimmten Zellspannungsschwellenwert überschreitet.

## Patentansprüche

1. Verfahren zur Überwachung eines Ladevorgangs einer Batterie (20), wobei
- die Batterie (20), ein Lademodul (33), welches die Batterie (20) mit einem Ladestrom versorgt, sowie mindestens ein zusätzlicher elektrischer Verbraucher (34) Komponenten einer elektrischen Schaltung sind;
- wobei der zusätzliche Verbraucher (34) eine elektrische Kühleinheit (34) zur Kühlung der Batterie (20) ist,
- die Batterie (20) eine Vielzahl von in Reihe geschalteten Batteriezellen (21) umfasst; und
- Zellspannungen mehrerer Batteriezellen (21) in regelmäßigen zeitlichen Abständen gemessen werden (S11), und
- ein Batterieladestrom der Batterie (20) in regelmäßigen zeitlichen Abständen gemessen wird (S11); und
- mindestens eine Temperatur der Batterie (20) in regelmäßigen zeitlichen Abständen gemessen wird (S11),
**dadurch gekennzeichnet, dass**
eine Belastung der Batterie (20) durch einen Einschaltvorgang der elektrischen Kühleinheit (34) zur Kühlung der Batterie (20) verhindert wird (S16), wenn die gemessene Zellspannung einer Batteriezelle (21) einen vorbestimmten Zellspannungsschwellenwert überschreitet (S14),
wobei in Abhängigkeit der Zellspannungen, des Batterieladestroms und der Temperatur ein Schätzwert ermittelt wird, welcher einer geschätzten Maximaltemperatur in der Batterie (20) bei ununterbrochener Fortsetzung des Ladevorgangs entspricht (S12); und die elektrische Kühleinheit (34) eingeschaltet wird (S15), wenn der Schätzwert einen vorbestimmten Temperaturschwellenwert überschreitet (S13), aber nicht wenn die gemessene Zellspannung einer Batteriezelle (21) den vorbestimmten Zellspannungsschwellenwert überschreitet (S14).

2. Verfahren nach Anspruch 1, wobei die Batterie (20) und der zusätzliche Verbraucher (34) Teile eines Kraftfahrzeugs sind und wobei ein Hauptsteuergerät des Kraftfahrzeugs (32) den zusätzlichen Verbraucher (34) ansteuert.

3. Verfahren nach Anspruch 1 oder 2, wobei bei der Ermittlung des Schätzwertes eine Hysterese der Zellspannungen berücksichtigt wird.

4. Verfahren nach Ansprüchen 2 oder 2 und 3, wobei der Schätzwert von einer Batteriemanagementeinheit ermittelt und an das Hauptsteuergerät des Kraftfahrzeugs (32) gesendet wird.

5. Verfahren nach Anspruch 4, wobei der Schätzwert von der Batteriemanagementeinheit über einen CAN-Bus (31) an das Hauptsteuergerät des Fahrzeugs (32) übermittelt wird.

6. Ein Batteriesystem (30) mit einer Batterie (20), einer elektrischen Kühleinheit (34) zur Kühlung der Batterie (20) und einer mit der Batterie verbundenen Batteriemanagementeinheit, wobei die Batterie (20) eine Vielzahl von in Reihe geschalteten Batteriezellen (21) umfasst; und die Batteriemanagementeinheit über mehrere Spannungsmesseinheiten (22), welche dazu ausgebildet sind, eine Zellspannung jeweils einer Batteriezelle (21) zu messen, wenigstens eine Temperaturmesseinheit (23), welche dazu ausgebildet ist, eine Temperatur der Batterie zu messen, wenigstens eine Strommesseinheit (24), welche dazu ausgebildet ist, einen Batterieladestrom zu messen, und einen mit den Spannungsmesseinheiten (22), der Temperaturmesseinheit (23) und der Strommesseinheit (24) verbundenen Kontroller (25) verfügt,
**dadurch gekennzeichnet,**
**dass** der Kontroller (25) dazu ausgebildet ist, während eines Ladevorgangs der Batterie (20) ein Verfahren nach Anspruch 1 auszuführen.

7. Batteriesystem nach Anspruch 6, wobei mehrere Temperaturmesseinheiten (23) in der Batterie angeordnet sind, welche ausgebildet sind, die Temperatur in verschiedenen Bereichen der Batterie zu messen.

8. Batteriesystem nach Anspruch 6 oder 7, wobei der Schätzwert über eine Schnittstelle der Batteriemanagementeinheit, insbesondere eine CAN-Schnittstelle, ausgebbar ist.

9. Kraftfahrzeug mit einem Batteriesystem (30) nach einem der Ansprüche 6 bis 8,
**dadurch gekennzeichnet, dass**
das Kraftfahrzeug dazu ausgebildet ist, während eines Ladevorgangs der Batterie ein Verfahren nach den Ansprüchen 1 bis 5 auszuführen.

## Claims

1. Method for monitoring a charging process of a battery (20), wherein
- the battery (20), a charging module (33), which supplies the battery (20) with a charging current, and at least one additional electrical consumer (34) are components of an electrical circuit;
- wherein the additional consumer (34) is an electric cooling unit (34) for cooling the battery (20),
- the battery (20) comprises a plurality of battery cells (21) connected in series; and
- cell voltages of a plurality of battery cells (21) are measured at regular time intervals (S11), and
- a battery charging current of the battery (20) is measured at regular time intervals (S11); and
- at least one temperature of the battery (20) is measured at regular time intervals (S11),
**characterized in that**
loading of the battery (20) by a switch-on process of the electric cooling unit (34) for cooling the battery (20) is prevented (S16) if the measured cell voltage of a battery cell (21) exceeds a predetermined cell voltage threshold value (S14),
wherein an estimated value, which corresponds to an estimated maximum temperature in the battery (20) (S12) when the charging process is continued uninterruptedly, is determined as a function of the cell voltages, of the battery charging current and of the temperature; and the electric cooling unit (34) is switched on (S15) if the estimated value exceeds a predetermined temperature threshold value (S13), but is not switched on if the measured cell voltage of a battery cell (21) exceeds the predetermined cell voltage threshold value (S14).

2. Method according to Claim 1, wherein the battery (20) and the additional consumer (34) are parts of a motor vehicle, and wherein a main control device of the motor vehicle (32) actuates the additional consumer (34).

3. Method according to Claim 1 or 2, wherein a hysteresis of the cell voltages is taken into account during the determination of the estimated value.

4. Method according to Claims 2 or 2 and 3, wherein the estimated value is determined by a battery management unit and sent to the main control device of the motor vehicle (32).

5. Method according to Claim 4, wherein the estimated value is transmitted by the battery management unit to the main control device of the vehicle (32) via a CAN bus (31).

6. Battery system (30) having a battery (20), an electric cooling unit (34) for cooling the battery (20) and a battery management unit which is connected to the battery, wherein the battery (20) comprises a plurality of battery cells (21) which are connected in series; and the battery management unit has a plurality of voltage measuring units (22), designed to measure a cell voltage of, in each case, one battery cell (21), at least one temperature measuring unit (23), which is designed to measure a temperature of the battery, at least one current measuring unit (24), which is designed to measure a battery charging current, and a controller (25), which is connected to the voltage measuring units (22), to the temperature measuring unit (23) and to the current measuring unit (24),
**characterized**
**in that** the controller (25) is designed to carry out, during a charging process of the battery (20), a method according to Claim 1.

7. Battery system according to Claim 6, wherein a plurality of temperature measuring units (23) are arranged in the battery and are designed to measure the temperature in various regions of the battery.

8. Battery system according to Claim 6 or 7, wherein the estimated value can be output via an interface of the battery management unit, in particular a CAN interface.

9. Motor vehicle having a battery system (30) according to one of Claims 6 to 8,
**characterized in that**
the motor vehicle is designed to carry out a method according to Claims 1 to 5 during a charging process of the battery.

## Revendications

1. Procédé de surveillance d'une opération de charge d'une batterie (20),
- la batterie (20), un module de charge (33) qui alimente la batterie (20) avec un courant de charge, ainsi qu'au moins un consommateur électrique (34) supplémentaire étant des composants d'un circuit électrique ;
- le consommateur (34) supplémentaire étant une unité de refroidissement (34) électrique destinée à refroidir la batterie (20) ;
- la batterie (20) comprenant une pluralité de cellules de batterie (21) branchées en série ; et
- les tensions de cellule de plusieurs cellules de batterie (21) étant mesurées à intervalles de temps réguliers (S11), et
- un courant de charge de la batterie (20) étant mesuré à intervalles de temps réguliers (S11) ; et
- au moins une température de la batterie (20) étant mesurée à intervalles de temps réguliers (S11),
**caractérisé en ce que**
une sollicitation de la batterie (20) par une opération de mise en circuit de l'unité de refroidissement (34) électrique destinée à refroidir la batterie (20) étant évitée (S16) lorsque la tension de cellule mesurée d'une cellule de batterie (21) dépasse une valeur de seuil de tension de cellule prédéfinie (S14),
une valeur estimée étant déterminée en fonction des tensions de cellule, du courant de charge de batterie et de la température, laquelle correspond à une température maximale estimée dans la batterie (20) dans le cas d'une poursuite ininterrompue de l'opération de charge (S12) ; et l'unité de refroidissement (34) électrique étant mise en circuit (S15) lorsque la valeur estimée dépasse une valeur de seuil de température prédéfinie (S13), mais pas lorsque la tension de cellule mesurée d'une cellule de batterie (21) dépasse la valeur de seuil de tension de cellule prédéfinie (S14).

2. Procédé selon la revendication 1, la batterie (20) et le consommateur supplémentaire (34) étant des parties d'un véhicule automobile et un contrôleur principal du véhicule automobile (32) commandant le consommateur supplémentaire (34).

3. Procédé selon la revendication 1 ou 2, une hystérésis des tensions de cellule étant prise en compte lors de la détermination de la valeur estimée.

4. Procédé selon les revendications 2 ou 2 et 3, la valeur estimée étant déterminée par une unité de gestion de batterie et envoyée au contrôleur principal du véhicule automobile (32).

5. Procédé selon la revendication 4, la valeur estimée étant communiquée par l'unité de gestion de batterie au contrôleur principal du véhicule automobile (32) par le biais d'un bus CAN (31).

6. Système de batterie (30) comprenant une batterie (20), une unité de refroidissement (34) électrique destinée à refroidir la batterie (20) et une unité de gestion de batterie reliée à la batterie, la batterie (20) comprenant une pluralité de cellules de batterie (21) branchées en série ; et
l'unité de gestion de batterie disposant de plusieurs unités de mesure de tension (22) qui sont configurées pour mesurer une tension de cellule respectivement d'une cellule de batterie (21), au moins une unité de mesure de température (23) qui est configurée pour mesurer une température de la batterie, au moins une unité de mesure de courant (24) qui est configurée pour mesurer un courant de charge de la batterie, et un contrôleur (25) qui est relié aux unités de mesure de tension (22), à l'unité de mesure de température (23) et à l'unité de mesure de courant (24),
**caractérisé en ce que**
le contrôleur (25) est conçu pour mettre en oeuvre un procédé selon la revendication 1 pendant une opération de charge de la batterie (20).

7. Système de batterie selon la revendication 6, plusieurs unités de mesure de température (23) étant disposées dans la batterie, lesquelles sont configurées pour mesurer la température dans différentes zones de la batterie.

8. Système de batterie selon la revendication 6 ou 7, la valeur estimée pouvant être délivrée par le biais d'une interface de l'unité de gestion de batterie, notamment une interface CAN.

9. Véhicule automobile équipé d'un système de batterie (30) selon l'une des revendications 6 à 8,
**caractérisé en ce que** le véhicule automobile est configuré pour mettre en oeuvre un procédé selon les revendications 1 à 5 pendant une opération de charge de la batterie.
